# FASCICULE DE BREVET EUROPEEN

(11) **EP 2 282 293 B1**
(45) Date de publication et mention de la délivrance du brevet: **14.01.2015**
(21) Numéro de dépôt: 10168871.1
(22) Date de dépôt: 08.07.2010
(51) Int. Cl.: G06T 7/00, G01N 21/53

(54) **Procédé de détermination d'une région d'intérêt dans une image**
Verfahren zur Bestimmung eines Bereiches von Interesse in einem Bild
Method for determining a region of interest in an image

(30) Priorité: 08.07.2009 FR 0903384
(43) Date de publication de la demande: 09.02.2011
(73) Titulaire: Valeo Vision, 93012 Bobigny Cedex (FR)
(72) Inventeur: Hue, David, 78400 CHATOU (FR); Ahiad, Samia, 93250 VILLEMOMBLE (FR); Bensrhair, Abdelaziz, 76130 MONT SAINT AIGNAN (FR)

(56) Documents cités:
- HIGGINS W E ET AL: "Symmetric region growing" IEEE TRANSACTIONS ON IMAGE PROCESSING, IEEE SERVICE CENTER, PISCATAWAY, NJ, US, vol. 12, no. 9, 1 septembre 2003 (2003-09-01), pages 1007-1015, XP011099960 ISSN: 1057-7149
- TREMEAU A ET AL: "A region growing and merging algorithm to color segmentation" PATTERN RECOGNITION, ELSEVIER, GB, vol. 30, no. 7, 1 juillet 1997 (1997-07-01), pages 1191-1204, XP000926385 ISSN: 0031-3203
- HOJJATOLESLAMI S A ET AL: "REGION GROWING: A NEW APPROACH" IEEE TRANSACTIONS ON IMAGE PROCESSING, IEEE SERVICE CENTER, PISCATAWAY, NJ, US, vol. 7, no. 7, 1 juillet 1998 (1998-07-01) , pages 1079-1084, XP000766022 ISSN: 1057-7149
- YONG JIN LEE ET AL: "Mammographic mass detection by adaptive thresholding and region growing" INTERNATIONAL JOURNAL OF IMAGING SYSTEMS AND TECHNOLOGY WILEY USA, vol. 11, no. 5, 2000, pages 340-346, XP002565231 ISSN: 0899-9457
- FAN S J X ET AL: "Edge based region growing - A new image segmentation method" 2004, PROCEEDINGS VRCAI 2004 - ACM SIGGRAPH INTERNATIONAL CONFERENCE ON VIRTUAL REALITY CONTINUUM AND ITS APPLICATIONS IN INDUSTRY - PROCEEDINGS VRCAI 2004 - ACM SIGGRAPH INTERNATIONAL CONFERENCE ON VIRTUAL REALITY CONTINUUM AND ITS APPLICATIONS IN INDUST , XP002565232 * section 1 *
- KITASAKA T ET AL: "A method for segmenting bronchial trees from 3D chest x-ray CT images" MEDICAL IMAGE COMPUTING AND COMPUTER-ASSISTED INTERVENTION - MICCAI 2003. 6TH INTERNATIONAL CONFERENCE. PROCEEDINGS. PART II (LECTURE NOTES IN COMPUT. SCI. VOL. 2879) SPRINGER - VERLAG BERLIN, GERMANY, 2003, pages 603-610, XP002565233 ISBN: 3-540-20464-4
- NICOLAS HAUTIÉRE ET AL: "Automatic fog detection and estimation of visibility distance through use of an onboard camera" MACHINE VISION AND APPLICATIONS, SPRINGER, BERLIN, DE, vol. 17, no. 1, 1 avril 2006 (2006-04-01), pages 8-20, XP019323919 ISSN: 1432-1769
- CHANG Y-L ET AL: "ADAPTIVE IMAGE REGION-GROWING" 1 novembre 1994 (1994-11-01), IEEE TRANSACTIONS ON IMAGE PROCESSING, IEEE SERVICE CENTER, PISCATAWAY, NJ, US LNKD- DOI:10.1109/83.336259, PAGE(S) 868 - 872 , XP000478144 ISSN: 1057-7149 * section 2 paragraphe 1-3 *
- CUFI X ET AL: "A concurrent region growing algorithm guided by circumscribed contours" 3 septembre 2000 (2000-09-03), PATTERN RECOGNITION, 2000. PROCEEDINGS. 15TH INTERNATIONAL CONFERENCE ON SEPTEMBER 3-7, 2000; [PROCEEDINGS OF THE INTERNATIONAL CONFERENCE ON PATTERN RECOGNITION. (ICPR)], LOS ALAMITOS, CA, USA,IEEE COMPUT. SOC, US LNKD- DOI:10.1109/ICPR.2000.905369, , XP010533581 ISBN: 978-0-7695-0750-7 * le document en entier *

## Description

La présente invention porte sur un procédé et un système pour déterminer une région d'intérêt dans une image.

Elle trouve son application notamment dans l'industrie automobile, avec par exemple la détection de la distance de visibilité par temps de brouillard.

Avec le développement des technologies de l'électronique, des capteurs et des moyens de traitement, de nombreuses améliorations ont été proposées pour rendre plus sûre ou confortable la conduite des véhicules. Certaines de ces améliorations reposent sur l'analyse d'une image de l'environnement du véhicule pour adapter le comportement du véhicule ou pour informer le conducteur. Tel est le cas par exemple des systèmes de détermination d'une distance de visibilité. Ces systèmes visent notamment à adapter l'éclairage du véhicule en fonction de la distance de visibilité.

De manière connue, ces systèmes prévoient l'acquisition d'une image et la détermination dans cette image d'une région d'intérêt destinée à faire l'objet d'un traitement en temps réel. La détermination d'une région d'intérêt vise à exclure de l'image les éléments qui en perturberaient le traitement. Elle permet également de limiter la zone de l'image faisant l'objet d'un traitement et par conséquent de diminuer la quantité d'informations à traiter. Elle offre ainsi la possibilité de réduire le temps et les ressources nécessaires au traitement.

Dans les systèmes existants, on détermine une région d'intérêt en utilisant une méthode par accroissement de régions. Selon cette méthode, la luminance de chaque pixel est analysée et comparée avec la luminance des pixels qui lui sont voisins. Si l'écart de luminance est inférieur à un seuil prédéfini, alors on étend la région d'intérêt à ces pixels voisins de sorte à définir une région homogène, sinon on exclut ces pixels de la région d'intérêt. Cette méthode est notamment décrite dans le document "A segmentation system based on thresholding. Graphical Models and Image Processing" [Käohler, 1981]

Cette méthode par accroissement de régions nécessite pour chaque pixel une détermination de luminance et une comparaison avec les pixels qui lui sont voisins. Cette méthode implique donc un travail considérable de traitement. Elle est par conséquent soit peu robuste, et ne permet alors pas d'écarter de la région d'intérêt des éléments non pertinents, soit lourde en terme de temps de calcul et de consommation de ressources. Elle s'avère en pratique peu adaptée à l'automobile puisque ce type d'application nécessite une détermination rapide et fiable de la région d'intérêt tout en limitant les coûts de revient.

L'article de Higgins et al. "Symmetric region growing", IEEE Transcation on Image Processing, septembre 2003, décrit une méthode générale de croissance de région ligne par ligne pouvant être mise en oeuvre facilement dans un véhicule routier. Cependant, cet article ne décrit pas la définition d'une zone de recherche spécifique à la géométrie des images routières.

La présente invention vise à fournir un procédé pour déterminer avec précision une région d'intérêt dans une image tout en consommant moins de ressource en terme de traitement.

A cet effet, on prévoit selon l'invention un procédé de détermination d'une région d'intérêt tel que décrit à la revendication 1.

Ainsi l'invention se base sur la luminance des segments, sans opérer une discrimination de pixels basée sur la luminance de chacun des pixels. Elle n'impose ainsi pas de contraintes de voisinage à chacun des pixels contrairement aux méthodes connues. Elle permet par conséquent de limiter considérablement les ressources nécessaires au traitement de l'image. Par ailleurs, en se basant sur la sélection des segments en fonction de leur niveau de luminance, l'invention permet d'exclure les éléments de l'image qui induisent des inhomogénéités.

On détermine ainsi une région d'intérêt homogène de manière rapide et/ou sans nécessiter des moyens de traitement complexes et onéreux.

Le procédé selon l'invention pourra en outre présenter, de manière facultative, au moins l'une quelconque des caractéristiques suivantes :
- le niveau de luminance NVG(Sⱼ) est un niveau de luminance moyen NVGmoyen(Sⱼ) correspondant à la moyenne des luminances de chacun des pixels de ce segment Sⱼ,
- on détermine si le niveau moyen de luminance NVGmoyen(Sⱼ) de ce segment est compris dans l'intervalle [NVGmoyen(Lᵢ₋₁) - S ; NVGmoyen(Lᵢ₋₁) +S'] avec S et S' étant des seuils prédéfinis et NVGmoyen(Lᵢ₋₁) étant le niveau de luminance de une ou plusieurs autres lignes adjacentes,
- si NVGmoyen(Sⱼ) est compris dans cet intervalle alors on sélectionne le segment Sⱼ,
- si NVGmoyen(Sⱼ) n'est pas compris dans cet intervalle alors on exclut ce segment Sⱼ de la région d'intérêt.

- Avantageusement, on prévoit que le niveau de luminance NVGmoyen(Lᵢ₋₁) correspond au niveau de luminance moyen de une ou plusieurs autres lignes adjacentes.
- De manière préférée on détermine ladite différence en comparant le niveau moyen de luminance NVGmoyen(Sj) du segment considéré et la luminance moyenne NVGmoyen(Lᵢ₋₁) de l'une des lignes adjacentes seulement.

Par exemple, seule la luminance moyenne NVGmoyen(Lᵢ₋₁) de la ligne précédente Lᵢ₋₁ est analysée et comparée au segment considéré. Cela permet de détecter des zones homogènes et de retenir des zones présentant une dégradation progressive du contraste tout en limitant les ressources nécessaires au traitement.

Ainsi, selon l'invention, la sélection d'un segment dépend de la luminance moyenne d'une ligne voisine. Cette sélection ne dépend donc pas uniquement d'un paramètre prédéfini. Il en résulte que l'invention s'adapte automatiquement en fonction de la luminosité ambiante. Par conséquent, l'invention améliore la détection de régions homogènes quel que soit l'environnement extérieur du véhicule.

Cela s'avère particulièrement avantageux puisque les méthodes actuelles reposent sur des seuils d'accroissement prédéfinis. Or, pour une application à l'automobile il est nécessaire de pouvoir identifier une région homogène quel que soit le type de route ou quelle que soit la luminosité ambiante. Les méthodes actuelles, contrairement à l'invention, ne permettent pas forcément de détecter une région homogène dans une large gamme d'environnements de conduite.

En outre, dans les systèmes existants, la méthode par accroissement de région est souvent couplée à une méthode de détection de contour. Cette dernière a pour fonction d'exclure de l'image des pixels appartenant à des zones non homogènes correspondant à des objets ponctuels de l'image tels que des véhicules, des lignes de marquage routiers, des arbres etc. Cependant, les méthodes de détection de contours ne permettent pas d'identifier des objets qui apparaissent estompés sur l'image du fait du brouillard ou d'un manque de luminosité par exemple. Ces objets ne sont alors pas détectés. Ils sont intégrés dans la région d'intérêt et perturbent alors le profil de luminance. Ils induisent par conséquence une imprécision au niveau du calcul de la distance de visibilité.

Avec le procédé selon l'invention, le choix des seuils permet de retenir dans la région d'intérêt des segments présentant une dégradation progressive du contraste de l'image tout en excluant les textures estompées par le brouillard et représentant des objets tels que des arbres, des ombres, des véhicules etc.

Contrairement aux procédés connus, l'invention permet par conséquent de déterminer des zones homogènes en éliminant les objets même s'ils apparaissent estompés sur l'image.
- De manière alternative, pour tout ou partie de l'image, on ne retient pour chaque ligne Lᵢ que le segment ayant le niveau moyen de gris NVGmoyen(Sⱼ) le plus élevé. Avantageusement, on effectue cette sélection de segment que pour la zone correspondant au ciel. Cette zone présente généralement le niveau de gris le plus élevé.
- La définition de chaque segment Sⱼ d'une ligne Lᵢ comprend les étapes suivantes : on considère un pixel de la ligne Lᵢ, on constitue le segment Sⱼ en incrémentant ce pixel des pixels consécutifs et appartenant à cette même ligne Lᵢ jusqu'à atteindre un nombre maximal de pixels prédéterminé.

Ainsi, pour définir les segments on ne se préoccupe pas de comparer la luminance de chaque pixel avec la luminance des pixels qui lui sont adjacents. Les segments sont définis sans imposer de contrainte de voisinage au niveau des pixels. Les segments sont ainsi définis de manière particulièrement aisée sans nécessiter d'importantes ressources en terme de traitement.
- De manière avantageuse, préalablement à la définition de chaque segment Sⱼ d'une ligne Lᵢ, on identifie des pixels formant des contours par une méthode de détection de contours et on ne considère que le pixel précédent le pixel correspondant au contour forme une extrémité de segment. Ce pixel de contour n'est pas intégré dans le segment construit.

On élimine ainsi les pixels associés à des contours. Cette étape préalable à la définition des segments permet d'imposer les extrémités de segments aux frontières de chaque contour détecté. On exclut ainsi les objets qui perturbent l'homogénéité de la région d'intérêt. En outre, on réduit le traitement effectué puisque les pixels formant un contour sont écartés des segments et ne sont pas analysés.
- On exclut le segment Sⱼ de la région d'intérêt si la longueur de ce segment Sⱼ est inférieure à une longueur minimale prédéterminée.
- On isole dans l'image une fenêtre de recherche à l'intérieur de laquelle on définit la pluralité de lignes Lᵢ. On élimine ainsi une partie des éléments qui dégradent l'homogénéité de la zone à traiter. On réduit en outre la surface de l'image qui fait l'objet d'un traitement visant à déterminer la région d'intérêt ainsi que les ressources nécessaires au traitement.
- On considère qu'un pixel incrémenté forme une extrémité de segment lorsqu'il correspond à une bordure de la fenêtre de recherche. La définition des segments prend ainsi en compte les limites de la fenêtre de recherche. Cette fenêtre définit et impose ainsi des extrémités de segments.
- De manière préférée, les lignes sont horizontales. Cela s'avère avantageux dans une application visant par exemple à déterminer une ligne d'horizon avec comme finalité le calcul d'une distance de visibilité. On peut également prévoir des lignes verticales ou obliques.
- On découpe la fenêtre de recherche en une pluralité de zones et on attribue à chaque zone des règles spécifiques concernant la définition des segments Sⱼ et/ou des lignes Lᵢ.

Ainsi, on applique des règles de définition de segments qui dépendent de la zone considérée. On prévoit par exemple de faire varier la taille minimale et/ou la taille maximale des segments selon la zone considérée. Plus une ligne comporte de segments, plus les ressources nécessaires au traitement sont importantes. On peut alors concentrer les ressources sur les zones critiques afin d'optimiser la répartition des ressources de traitement.

Lorsque la sélection d'un segment repose sur une comparaison entre un seuil et la différence entre le niveau moyen de luminance NVG moyen(Sj) de ce segment et le niveau moyen de luminance des segments fusionnés NVGmoyen(Lᵢ₋₁) pour une ou plusieurs autres lignes adjacentes, on peut également attribuer un seuil spécifique à chaque zone.

Cela permet de moduler la sélection des segments et leur incorporation dans la région d'intérêt en fonction de la zone considérée. En fonction des seuils, on peut ainsi être très sélectif, c'est-à-dire faire en sorte que les objets estompés par le brouillard tels que les arbres ou les ombres ne soient pas retenus dans la région d'intérêt tout en étant moins sélectif pour des zones dans lesquelles la probabilité de rencontrer ces objets est faible.
- La fenêtre de recherche comprend au moins une première zone et une deuxième zone respectivement positionnées horizontalement autour d'un premier et d'un deuxième point de fuite de l'image. Dans le cas d'une application automobile, les zones sont ainsi positionnées autour de directions que le véhicule est susceptible d'emprunter.
- De préférence, les première et deuxième zones définissent respectivement une zone inférieure et une zone supérieure de la fenêtre de recherche.
- Avantageusement, le procédé est mise en oeuvre dans un véhicule automobile et on détermine au moins un point de fuite à partir d'un système de détection de point de fuite basé sur un angle au volant du véhicule et/ou à partir d'informations issues d'un système de navigation et/ou à partir d'un système de détection de lignes de marquage routier.

On peut ainsi former une première zone inférieure centrée autour du point de fuite défini selon des méthodes connues de l'homme du métier. Cette zone correspond au voisinage immédiat du véhicule. On peut également former une deuxième zone, supérieure, centrée autour d'un deuxième point de fuite définie par un angle au volant du véhicule et/ou à partir d'informations issues d'un système de navigation et/ou à partir d'un système de détection de lignes de marquage routier.
- De préférence, la fenêtre de recherche comprend une troisième zone définie de sorte à assurer une continuité entre les première et deuxième zones.
- De préférence, on découpe la fenêtre de recherche de sorte que la troisième zone corresponde dans l'image à une transition entre la route et le ciel. On définit ainsi les trois zones de sorte que la ligne d'horizon soit contenue dans la zone intermédiaire.
- On applique aux zones de la fenêtre de recherche des règles de sorte que la taille des segments dans la troisième zone soit inférieure à celle des segments de la première et/ou de la deuxième zone. On alloue ainsi plus de ressources de traitement à la zone intermédiaire. C'est en effet dans cette zone que devrait être détectée la ligne d'horizon. La détermination de la région d'intérêt de cette zone doit par conséquent être particulièrement précise.

Afin d'obtenir une précision optimale, on applique la méthode selon l'invention à chacune des lignes de l'image ou de la fenêtre de recherche. Pour limiter les ressources nécessaires au traitement, on peut appliquer cette méthode sur toutes les lignes de seulement une ou certaines zones. On privilégiera alors les zones critiques. On peut encore appliquer cette méthode à seulement certaines des lignes de l'image, de la fenêtre de recherche ou d'une zone.
- Avantageusement, on positionne verticalement les limites entre les zones de la fenêtre de recherche en fonction d'informations relatives au tangage du véhicule ou de sorte que la troisième zone soit verticalement centrée autour d'un point de fuite de l'image.
- On fusionne la région d'intérêt obtenue avec une région déterminée selon un autre procédé de détermination de région d'intérêt. On peut ainsi confirmer ou préciser la région d'intérêt obtenue avec la méthode selon l'invention.
- Dans le cadre de l'invention, on prévoit un procédé pour évaluer une distance de visibilité. Selon ce procédé, on détermine une région d'intérêt en mettant en oeuvre le procédé selon l'une quelconque des caractéristiques précédentes, on détermine un niveau de luminance pour une pluralité de lignes de cette région d'intérêt, on en déduit un profil de luminance, on identifie un point d'inflexion sur ce profil de luminance et on déduit de ce point d'inflexion une distance de visibilité. Avantageusement, le niveau de luminance correspond à un niveau moyen de luminance pour cette pluralité de lignes.

On prévoit également dans le cadre de l'invention un système pour déterminer une région d'intérêt dans une image comprenant un dispositif d'acquisition d'une image ainsi que des moyens de traitement agencés pour mettre en oeuvre le procédé selon l'une quelconque des caractéristiques précédentes.

L'invention porte en outre sur un véhicule comportant un système selon le paragraphe précédent.

Selon un autre objet de l'invention, on prévoit un produit de programme d'ordinateur comportant une ou plusieurs séquences d'instructions exécutables par une unité de traitement d'information, l'exécution desdites séquences d'instructions permettant une mise en oeuvre d'un des procédés selon l'une quelconque des caractéristiques précédentes.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1 est un schéma illustrant les différentes étapes d'un exemple de mise en oeuvre de l'invention pour déterminer une distance de visibilité.
Les figures 2a et 2b sont des exemples de détermination de régions d'intérêt respectivement pertinentes et non pertinentes.
La figure 3 schématise les différentes étapes d'un exemple de détermination d'une région d'intérêt selon l'invention.
La figure 4a illustre un exemple de découpe selon l'invention d'une fenêtre de recherche en plusieurs zones dans une situation de conduite en ligne droite.
La figure 4b illustre un exemple de découpe selon l'invention d'une fenêtre de recherche en plusieurs zones dans une situation de conduite en courbe.
La figure 5 est un schéma illustrant un exemple d'algorithme de définition des segments.
La figure 6 illustre un exemple de définition de segments selon l'invention.
La figure 7 est un exemple de région d'intérêt obtenu en mettant en oeuvre l'invention.
La figure 8 illustre un autre exemple de mise en oeuvre de l'invention.

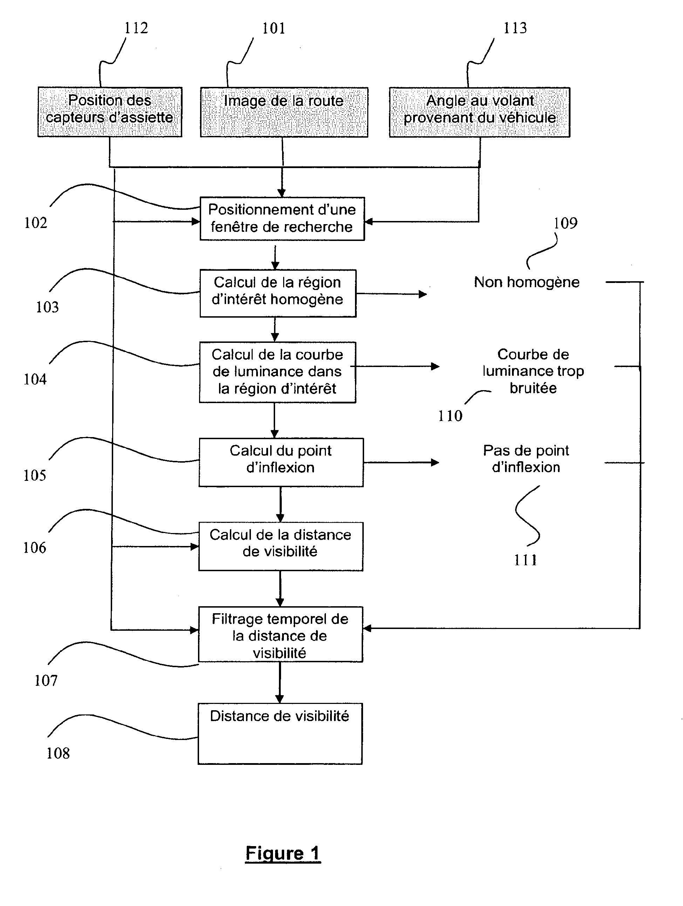

En référence aux figures 1 à 8, on a illustré des exemples de mise en oeuvre de l'invention pour déterminer une région d'intérêt. Dans ces exemples, la détermination d'une région d'intérêt a pour application la définition d'une distance de visibilité en particulier par temps de brouillard. Le calcul de la distance de visibilité permet par exemple de fournir à un automobiliste une distance maximale de conduite ou une distance de sécurité minimale à respecter. Cette application à la détection d'une distance de visibilité constitue un exemple permettant de comprendre clairement l'invention mais ne la limite aucunement. La méthode de détermination d'une région d'intérêt selon l'invention peut en effet être appliquée à d'autres applications comme par exemple l'identification des bords de voies en analysant uniquement les informations se trouvant sur la route lorsque les marquages au sol ne sont plus présents. Un autre exemple est l'utilisation de la méthode pour l'extraction de la route afin de détecter les véhicules ou les panneaux.

L'évaluation de la distance de visibilité fait par exemple intervenir les étapes illustrées en figure 1.
- On acquiert une image de l'environnement situé en avant d'un véhicule (étape 101).
- On détermine une région d'intérêt dans l'image. Avantageusement, on positionne dans l'image une fenêtre de recherche à l'intérieur de laquelle on effectue le traitement nécessaire à la détermination de la région d'intérêt (étape 102). La détermination de la région d'intérêt (étape 103) sera détaillée par la suite.
- On détermine une courbe de niveaux de gris ou profil de luminance dans la région d'intérêt (étape 104).
- On analyse cette courbe pour déterminer le point d'inflexion pertinent (étape 105).
- A partir de la position du point d'inflexion dans l'image et de la position des capteurs d'assiette, on en déduit la distance de visibilité grâce à la loi de Koschmieder (étape 106). A cette fin, on peut se référer à la thèse de Nicolas Hautière et à l'article : "Automatic fog détection and estimation of visibility through of an onboard camera" parue dans la revue "Machine vision and application" Springer-Verlag, BE, vol.17, N° du 1er avril 2006.
- De manière avantageuse, on peut améliorer cette méthode en se servant d'informations issues de l'angle au volant et/ou de données issues d'un système de navigation et/ou de données issues de détection de marquage routier et/ou encore de données issues de capteurs d'assiette (étapes 112, 113) pour positionner la fenêtre de recherche. Ce point sera également détaillé par la suite.

D'autre part, on peut également effectuer un filtrage temporel pour déterminer plus précisément la distance de visibilité (107, 108). Pour cela, on utilise par exemple un filtre de Kalman dans le but de filtrer temporellement les informations de distance de visibilité et également de prédire une distance de visibilité non calculée. En effet, il est possible que pour une image, la distance de visibilité ne soit pas calculée pour différentes raisons : région d'intérêt non homogène (109), courbe de luminance trop bruitée (110), pas de point d'inflexion trouvé (111). Dans ce cas, l'algorithme utilisé (le filtre de Kalman par exemple) prédit la distance de visibilité en se basant sur les valeurs précédentes et en utilisant la position des capteurs d'assiette.

Ainsi, si les étapes consistant à déterminer la région d'intérêt (étape 103), à calculer la courbe de luminance (étape 104) et à déduire le point d'inflexion (étape 105) ne sont pas conduites avec succès alors, seule une prédiction de la distance de visibilité est effectuée (étape 107).

L'évaluation de la distance de visibilité est directement conditionnée par la pertinence du profil de luminance. Ce dernier dépend lui-même étroitement de l'homogénéité de la région d'intérêt.

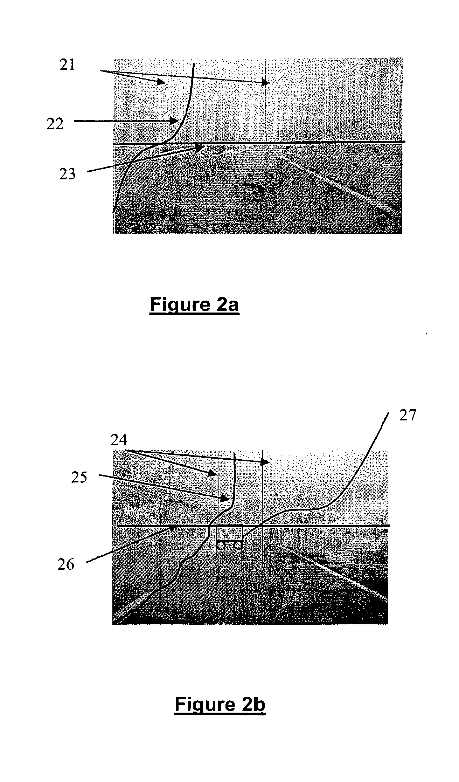

La figure 2a est une photo d'un environnement situé en avant du véhicule et comprenant peu de détails. La région d'intérêt délimitée par les bordures 21, 21 est homogène. Cette figure comprend un profil de luminance 22 présentant une forme sensiblement de "S" avec un seul point d'inflexion. Les déterminations de la ligne d'horizon et de la distance de visibilité sont alors possibles et précises.

La figure 2b illustre une évaluation de distance de visibilité utilisant une méthode existante par accroissement de régions. L'environnement situé en avant du véhicule comprend des objets tels qu'un véhicule 27 arrivant en sens inverse, des arbres etc. La région d'intérêt retenue selon la méthode connue est délimitée par les bordures 24, 24 et inclut ces objets. Cette région d'intérêt retenue n'est donc pas homogène. Le profil de luminance 25 est perturbé par la prise en compte de ces objets. La ligne d'horizon 26 ainsi que la distance de visibilité sont alors incorrectes.

Comme indiqué précédemment, l'invention propose une méthode pour déterminer une région d'intérêt homogène tout en limitant les ressources nécessaires au traitement.

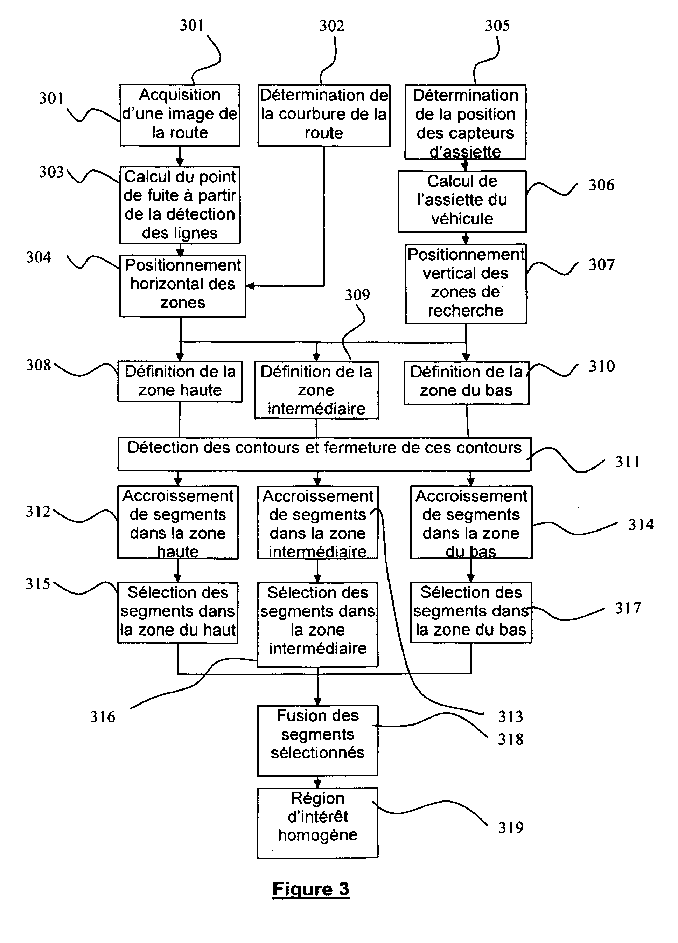

Un mode préféré de réalisation de l'invention va maintenant être détaillé en référence aux figures 3 à 7.

Tel que l'illustre le schéma de la figure 3, au cours d'une première étape (étape 301 - figure 3), on acquiert une image et on sélectionne une fenêtre de recherche dans l'image. De préférence, la fenêtre de recherche s'étend du haut au bas de l'image. Elle forme ainsi une bande dans l'image. Elle couvre des zones hétérogènes au niveau de la moyenne des niveaux de gris et des différentes lignes horizontales au niveau des objets qu'elle inclut.

Ainsi, le haut de l'image correspond au ciel. Le haut de l'image a donc une moyenne de niveaux de gris élevée par rapport au reste de l'image. Les objets que l'on peut habituellement trouver dans le haut de l'image sont des arbres, des lampadaires, des ponts etc.

Le bas de l'image correspond à la route et aux abords immédiats du véhicule. Le bas de l'image a donc une moyenne de niveaux de gris faible par rapport au reste de l'image. Les objets que l'on peut habituellement trouver dans le bas de l'image sont des marquages routiers, des véhicules suivis ou arrivant en sens inverse, des piétons ou encore tout objet posé sur le sol.

Le milieu de l'image correspond à une zone intermédiaire assurant une transition entre les zones mentionnées ci-dessus et formant le haut et le bas de l'image. C'est dans cette zone intermédiaire que se trouvera généralement le point d'inflexion recherché pour évaluer la distance de visibilité.

On découpe la fenêtre de recherche en une pluralité de zones. Avantageusement, ce découpage comprend trois zones. Une première zone correspond au haut de l'image, une deuxième zone correspond au bas de l'image et une troisième zone correspond à la zone intermédiaire (étapes 304, 308, 309, 310 - figure 3).

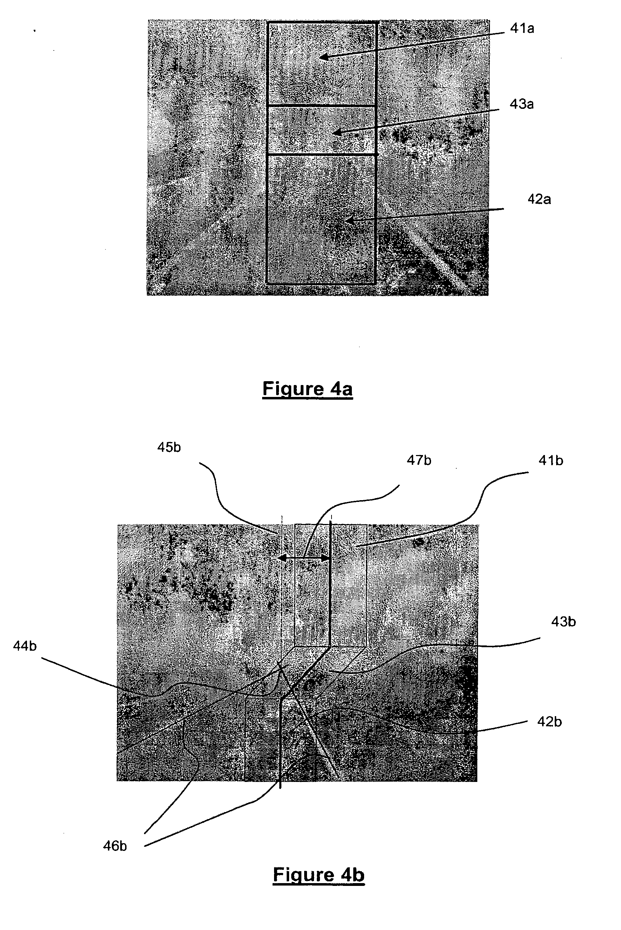

Un exemple de découpage de la fenêtre de recherche en trois zones 41 a, 42a, 43a est illustré en figure 4a.

De manière particulièrement avantageuse, on adapte le découpage de la fenêtre et le positionnement des zones en fonction d'informations relatives à l'environnement du véhicule et/ou à la situation de conduite. Par exemple, on peut positionner une zone en fonction d'un point de fuite de l'image et/ou d'un angle au volant provenant d'informations du véhicule et/ou d'informations issues d'un système de navigation et reflétant la forme de la route et/ou d'un système de détection de marquages routiers et/ou d'informations relatives au tangage du véhicule etc (étapes 302, 303, 306, 307 - figure 3). Ce positionnement des zones peut être horizontal et/ou vertical.

La figure 4b illustre un exemple de fenêtre de recherche dont le positionnement de certaines zones dépend de l'environnement du véhicule et/ou des situations de conduite. Dans cet exemple, la première zone 41 b correspond au haut de la fenêtre de recherche. Elle est centrée horizontalement autour d'un point de fuite en ligne droite. Des méthodes bien connues de l'homme du métier permettent de déterminer ce point de fuite. Lorsque le véhicule aborde un virage, comme dans cet exemple de la figure 4b, la zone du haut 41 b présente un décalage 47b par rapport à la zone du bas 42b. Ce décalage 47b est fonction de l'angle au volant et/ou fonction de la courbure de la route telle que définie par un système de navigation.

La deuxième zone 42b correspond au bas de la fenêtre. Elle est centrée autour du point de fuite 44b, 45b. Ce point de fuite est par exemple déterminé en fonction des lignes du marquage routier 46b, 46b. D'autres méthodes de détermination de point de fuite sont cependant bien connues de l'homme du métier.

La troisième zone 43b correspond à la zone intermédiaire. Elle est disposée de sorte à assurer une transition entre les première et deuxième zones 41 b, 42b. Elle s'étend donc de manière oblique pour assurer la continuité entre ces première et deuxième zones décalées horizontalement lorsque le véhicule est à l'approche d'une courbe.

Avantageusement, le positionnement vertical des limites entre les différentes zones est effectué en fonction de l'information de tangage du véhicule et/ou autour du point de fuite 44b (étapes 305, 306, 307 - figure 3).

De préférence, on effectue une détection des contours de l'image (étape 311 - figure 3). Cette détection de contours peut être opérée par l'une des méthodes bien connues de l'homme du métier telles que les méthodes Canny, Sobel, Prewitt, Roberts ou encore Zéro-cross. La détection de contours vise à identifier dans l'image les parties non homogènes. Ces parties reflètent généralement la présence d'un objet tel qu'un arbre, un véhicule, une ligne de marquage routier, un lampadaire etc. On identifie les pixels appartenant à des contours et on les écarte des étapes suivantes.

La détection de contours améliore ainsi l'homogénéité de la région d'intérêt et réduit le temps nécessaire à la définition et à la sélection des segments.

On identifie également les pixels définissant la fin d'une zone de la fenêtre de recherche. Sur les exemples illustrés, la fin d'une zone est délimitée par les bordures (21, 24 - figures 2a, 2b).

Dans une autre étape qui est caractéristique de l'invention, on découpe les lignes de chaque zone en segments. Ces segments sont formés par accroissement de pixels (étapes 312, 313, 314 - figure 3).

La taille minimale et la taille maximale de chaque segment sont prédéfinies. Ces tailles correspondent respectivement à un nombre minimal et maximal de pixels par segment.

Pour former un segment, on considère un pixel de la ligne Lᵢ, on associe à ce pixel des pixels consécutifs et appartenant à cette même ligne Lᵢ, jusqu'à rencontrer un pixel d'extrémité du segment Sⱼ. Ce pixel d'extrémité est identifié lorsqu'un nombre prédéterminé de pixels correspondant à la taille maximale du segment est atteint ou lorsqu'on rencontre un pixel formant un contour ou formant une fin de zone. La formation de chaque segment s'effectue ainsi par incrémentation de pixels, puis on opère un test portant sur le nombre maximal de pixels, la détection d'un contour ou d'une fin de zone.

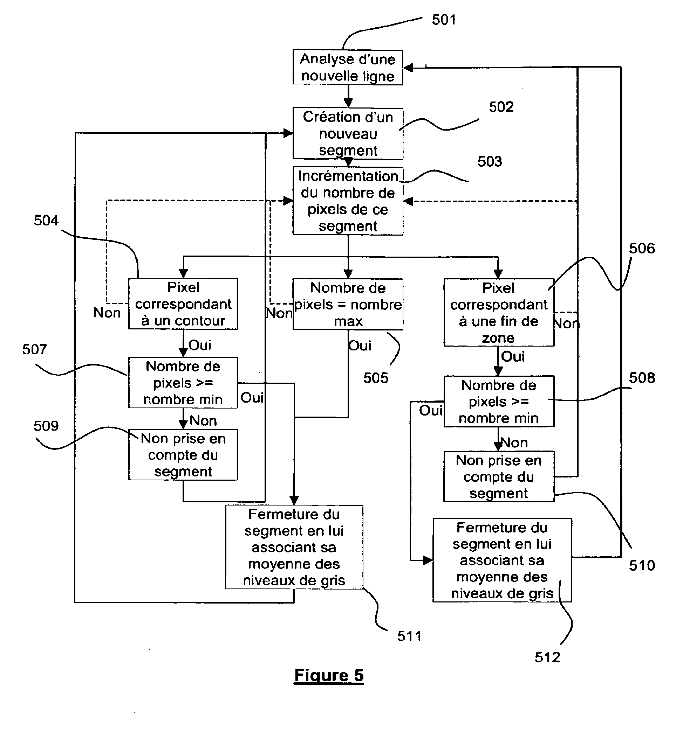

Le découpage d'une ligne en segments suit ainsi l'algorithme schématisé en figure 5.

A l'étape 501, le système selon l'invention déclenche l'analyse d'une nouvelle ligne. Un nouveau segment est alors créé à partir d'un premier pixel (étape 502). On associe à ce pixel un autre pixel de cette même ligne et qui lui est adjacent. On détermine si cet autre pixel correspond à un contour (étape 504) ou correspond à une fin de zone (étape 506) ou fait atteindre à ce segment son nombre maximal de pixels (étape 505).

Dans la négative, on incrémente le segment d'un pixel additionnel (étape 503) et on réitère les vérifications précédentes des étapes 504 à 506.

Lorsque l'une de ces vérifications est positive, c'est-à-dire lorsque le pixel ajouté correspond à un contour ou délimite une fin de zone ou porte le nombre de pixels de ce segment au maximum prédéfini, alors l'incrémentation de pixels cesse. Si le pixel incrémenté correspond à un contour, alors ce pixel de contour est écarté du segment et l'extrémité de ce segment est définie par le pixel précédent.

Par ailleurs, on détermine si ce pixel présente une longueur supérieure à la longueur minimale prédéfinie, c'est-à-dire si le nombre minimal de pixels a été atteint pour ce segment (étapes 507, 508))

Dans la négative, c'est-à-dire si la taille minimale du segment n'a pas été atteinte, alors on ne prend pas en compte ce segment (étapes 509, 510) et on crée un nouveau segment. Ce nouveau segment pourra avoir pour point de départ un pixel de la même ligne situé à l'extérieur du contour détecté et définissant la fin du segment précédent. Ce nouveau segment pourra avoir pour point de départ le pixel suivant dans le cas où le segment précédent a atteint une taille maximale. Dans le cas où une fin de zone est détectée lors du découpage du segment précédent, le pixel de départ du segment suivant est identifié sur la ligne suivante.

Dans l'affirmative, c'est-à-dire si le segment présente une taille supérieure à la taille minimale, alors ce segment est fermé (étapes 511, 512). Le dernier pixel traité correspond donc à une extrémité de segment.

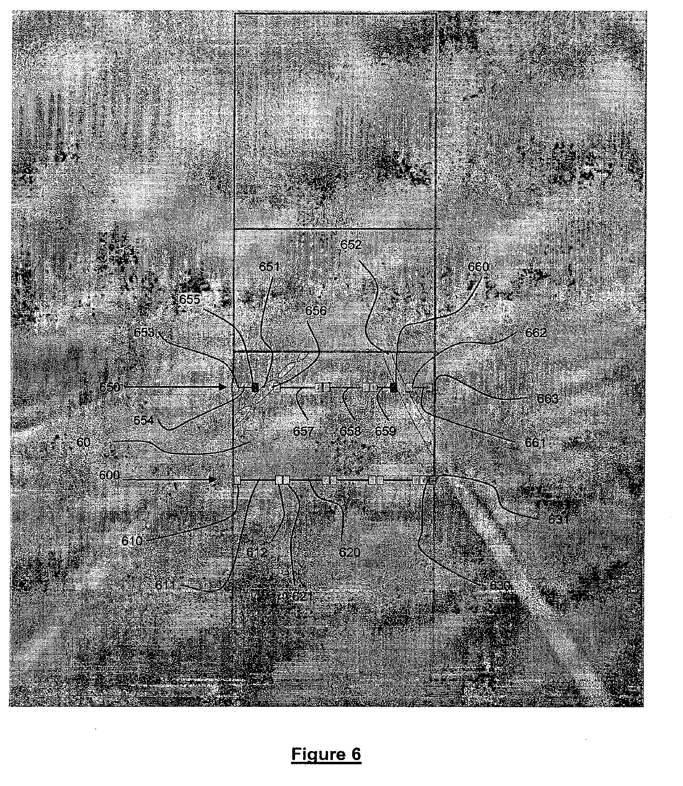

La figure 6 illustre un tel découpage. Sur cette figure, la zone du bas 60 fait apparaître deux lignes 600, 650 découpées en plusieurs segments. La ligne 600 ne comporte pas de pixel formant un contour. Le premier pixel 610 du premier segment 611 est identifié comme pixel de début de segment. Par incrémentation, ce premier pixel 610 s'étend sur cette ligne 600 de pixel en pixel jusqu'à atteindre un nombre maximum de pixels. Le pixel 612 portant ce nombre au maximum prédéfini est identifié comme pixel de fin de segment 612.

Le pixel 621 suivant sur la ligne est identifié comme pixel de début de segment 620 suivant. Les pixels voisins lui sont associés pour former cet autre segment 620. En fin de ligne, le pixel 631 définissant la fin de zone est détecté et interrompt le dernier segment 630. Si ce dernier segment 630 présente une taille supérieure à la taille minimale, alors il est conservé, sinon il est écarté de la suite du traitement.

La ligne 650 comporte des contours correspondant à un marquage routier discontinu 651 en milieu de route et à un marquage routier continu 652 en bordure de route. Ces contours sont identifiés par le système de traitement (étape 311 - figure 3). Le premier pixel 653 définit le début d'un premier segment 654 pour cette ligne 650. Par incrémentation, les pixels avoisinants sont incorporés à ce premier segment 654 jusqu'à parvenir au pixel 655 adjacent à un pixel du contour 651. Le segment 654 est alors interrompu. Le nombre minimum de pixels pour ce premier segment 654 est alors vérifié. Le pixel 656 suivant qui peut être sélectionné aux étapes 502, 503 est automatiquement un pixel situé en dehors du contour 651 puisque l'ensemble des pixels à l'intérieur du contour a été écarté du traitement. Ce pixel suivant 656 définit donc le début d'un deuxième segment 657. Les étapes précédentes sont réitérées. On obtient entre les deux contours 651, 652 plusieurs segments 657, 658 de taille maximale et un segment 659 de taille inférieure à la taille maximale et dont l'extrémité est définie par un pixel 660 adjacent au contour 652. Le segment 661 a pour début un pixel 662 délimitant le contour 652 et pour fin un pixel 663 délimitant l'extrémité de la zone 60.

On obtient ainsi pour chaque ligne analysée une pluralité de segments. On calcule pour chaque segment son niveau moyen de gris. De préférence, ce calcul est opéré directement à l'issue de la définition du segment. Le niveau moyen de gris correspond à la somme des niveaux de gris de chacun des pixels formant un segment rapporté au nombre de pixels de ce segment. On forme ainsi une sorte de carte des segments susceptibles d'être incorporés à la région d'intérêt.

Une étape suivante selon l'invention consiste à sélectionner parmi l'ensemble des segments définis ceux qui formeront la région d'intérêt. Cette sélection de segments est effectuée pour chacune des zones (étapes 315, 316 et 317 - figure 3). A cet effet, plusieurs méthodes de sélection peuvent être mises en oeuvre.

La méthode suivante s'est avérée particulièrement avantageuse. On calcule la différence entre le niveau moyen de gris de chaque segment NVGmoyen(Sj) et le niveau moyen de gris de la ligne précédente NVGmoyen(Lᵢ₋₁). Le niveau moyen de gris de la ligne précédente NVGmoyen(Lᵢ₋₁) correspond à la moyenne des niveaux moyens de gris des segments sélectionnés de la ligne précédente, c'est à dire à la somme des niveaux moyens de gris de chacun des segments sélectionnés dans cette ligne divisée par le nombre de segments sélectionnés dans cette ligne. On détermine si cette différence est comprise dans l'intervalle [S ; S'] où S et S' sont des seuils prédéfinis. On peut également déterminer de manière directe si le niveau moyen de gris des segments pour lesquels on effectue la sélection est compris dans l'intervalle [NVGmoyen(Lᵢ₋₁) - S ; NVGmoyen(Lᵢ₋₁) +S']. S et S' peuvent être définis à partir d'un ensemble d'images de tests.

On veille en particulier à ce que ces seuils soient suffisamment tolérants pour autoriser le passage d'une ligne à l'autre selon une dégradation progressive et naturelle du contraste de l'image. On veille également à ce que ces seuils soient suffisamment sélectifs pour ne pas retenir les segments situés sur des portions d'images qui correspondent à des objets apparaissant sous forme de texture estompée. Ces objets sont en particulier estompés par le brouillard ou par une faible luminosité. Ils sont par exemple des arbres, des ombres, des lampadaires, des véhicules, des ponts etc.

Dans les méthodes existantes, ces objets estompés sont bien souvent à l'origine d'erreurs significatives puisqu'ils ne sont pas identifiés par les méthodes de détection de contours ou par l'accroissement de régions et qu'ils perturbent l'homogénéité de la région d'intérêt.

Avec la méthode selon l'invention, la détection de contours permet d'éliminer dès le départ des pixels induisant une perturbation dans la fenêtre de recherche et conduisant à dégrader l'homogénéité de la région d'intérêt.

D'autres méthodes de sélection des segments peuvent être envisagées. On peut par exemple prévoir de ne sélectionner pour chaque ligne que le segment ayant le niveau moyen de gris le plus élevé. De préférence, on applique cette méthode dans la première zone correspondant au haut de l'image.

Un avantage important du découpage en différentes zones de la fenêtre de recherche consiste à pouvoir attribuer à chacune des zones des règles spécifiques pour définir ou sélectionner les segments. Ainsi, en fonction de la zone on peut faire varier les tailles minimale et maximale des segments. On peut ainsi faire varier la précision du découpage et le temps nécessaire au traitement. En augmentant la taille maximale des segments, on diminue le nombre de segments par ligne et on réduit le temps nécessaire à la sélection des segments.

Avantageusement, on analyse chacune des lignes de pixels. On peut également choisir pour une ou plusieurs zones d'analyser uniquement certaines lignes.

Le découpage de la fenêtre de recherche en plusieurs zones permet également d'appliquer des règles de sélection différentes selon les zones. On peut par exemple prévoir pour la zone intermédiaire et pour la zone du bas la méthode de sélection décrite précédemment et reposant sur la comparaison de la moyenne des niveaux de gris d'un segment NVGmoyen(Sⱼ) à un intervalle ; et prévoir pour la zone du haut la méthode décrite précédemment et consistant à ne retenir dans une ligne que le segment présentant le niveau moyen de gris NVGmoyen(Sⱼ) le plus élevé.

Le découpage en zones permet également de traiter ces différentes zones simultanément afin de réduire le temps nécessaire à la détermination de la région d'intérêt.

Une étape suivante de la méthode selon l'invention consiste à fusionner l'ensemble des segments sélectionnés au cours de l'étape précédente (étape 318 - figure 3). La fusion de ces segments forme une région d'intérêt (étape 319 - figure 3).

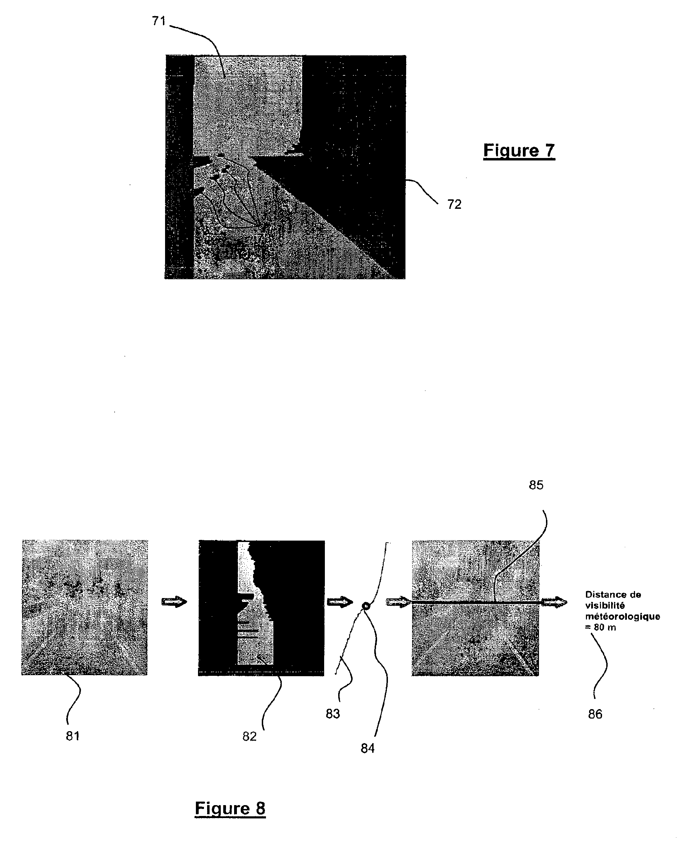

La figure 7 illustre un exemple de région d'intérêt 71 obtenue selon l'invention pour une image 72 comprenant des objets tels que des lignes de marquage routier 73. La détection des contours et la méthode par accroissement des segments permettent de définir, dans la fenêtre du bas, une région d'intérêt 71 en éliminant du milieu de la route les lignes de marquage 73 et les bordures pouvant contenir des arbres ou des textures qui perturbent le calcul de la courbe du profil de luminance. On obtient ainsi une région d'intérêt 71 présente une bonne homogénéité. Il est alors aisé d'établir pour cette région d'intérêt un profil de luminance avec un seul point d'inflexion et d'évaluer avec précision la distance de visibilité. De plus, cette région d'intérêt est obtenue sans nécessiter d'importantes ressources de traitement. En particulier, la méthode selon l'invention n'impose pas de contrainte de voisinage au niveau des pixels contrairement aux méthodes par accroissement de régions qui s'avèrent lourdes en terme de ressources nécessaires au traitement.

De manière avantageuse, on fusionne ou on confronte la région d'intérêt obtenue avec l'invention et une région d'intérêt obtenue avec une autre méthode. Cela permet d'affiner la pertinence de la région d'intérêt et d'augmenter le niveau de confiance de la région d'intérêt obtenue selon l'invention.

Un exemple non limitatif de mise en oeuvre va maintenant être décrit. Dans cet exemple, les méthodes schématisées aux figures 1, 3 et 5 en particulier sont appliquées.

Pour la détection des contours (étape 311 - figure 3), on utilise la méthode Canny bien connue de l'homme du métier (voir notamment le document [Deriche, 1987] Deriche, R. (1987). « Using canny's criteria to derive an optimal edge detector recursively implemented".)

La fenêtre est divisée en trois zones. Pour mettre en oeuvre la méthode Canny, on attribue un seuil bas de 40 et un seuil haut de 60 à la zone du bas et à la zone intermédiaire. On attribue un seuil bas de 60 et un seuil bas de 100 à la zone du haut.

Au cours de la sélection des segments (étapes 315 à 317 - figure 3), on applique aux zones du bas et à la zone intermédiaire la méthode suivante : si le niveau moyen de gris du segment considéré est compris dans l'intervalle [NVGmoyen (Lᵢ₋₁) - S ; NVGmoyen (Lᵢ₋₁) + S'] avec S = 5 et S' = 20 et NVGmoyen Lᵢ₋₁ = moyenne des niveaux moyens de gris des segments sélectionnés de la ligne précédente ; alors on sélectionne ce segment. Sinon on exclut ce segment de la région d'intérêt. Pour la zone du haut, on retient pour chaque ligne uniquement le segment ayant le niveau moyen de gris le plus élevé.

On fusionne les segments ainsi sélectionnés et on obtient le résultat illustré en figure 8.

A partir de l'image 81, on détermine une région d'intérêt 82 homogène. Tous les objets tendant à dégrader l'homogénéité de la région d'intérêt 82 (arbre, ligne de marquage routier, etc) sont en effet éliminés de cette région d'intérêt. On déduit alors de la région d'intérêt un profil de luminance 83 présentant un seul point d'inflexion 84. On évalue alors précisément à partir de ce point d'inflexion la ligne d'horizon 85 et on en déduit une distance de visibilité 86.

L'invention n'est pas limitée aux modes de réalisation décrits mais s'étend à tout mode de réalisation conforme à son esprit.

## Revendications

1. Procédé de détermination d'une région d'intérêt dans une image comprenant les étapes suivantes:
- on définit dans l'image une pluralité de lignes L_{i i=1,..,n} formées de pixels,
- dans chaque ligne Lᵢ, on définit une pluralité de segments S_{j j=1,..,m} constitués de pixels (312, 313, 314),
- on calcule un niveau de luminance NVG(Sⱼ) de chaque segment Sⱼ à partir de la luminance des pixels constituant ce segment Sⱼ,
- en fonction de ce niveau de luminance NVG(Sj) on sélectionne le segment Sⱼ ou on exclut ce segment Sⱼ de la région d'intérêt (315, 316, 317),
- on obtient la région d'intérêt en fusionnant l'ensemble des segments sélectionnés pour chacune des lignes (318),
**caractérisé en ce que** le procédé est mis en oeuvre dans un véhicule routier et **en ce que** :
- on isole dans l'image une fenêtre de recherche à l'intérieur de laquelle on définit la pluralité de lignes Li (600, 650),
- on découpe verticalement la fenêtre de recherche en une pluralité de zones et on attribue à chaque zone des règles spécifiques concernant la définition des segments Sj et/ou des lignes Li,
- la fenêtre de recherche comprenant au moins une première zone (41 a, 41b) et une deuxième zone (42a, 42b) respectivement positionnées horizontalement autour d'un premier et d'un deuxième point d'intérêt de l'image,
- on détermine au moins un des deux points d'intérêt comme étant un point de fuite (44b) à partir d'un système de détection de point de fuite basé sur un angle au volant du véhicule et/ou à partir d'informations issues d'un système de navigation et/ou à partir d'un système de détection de lignes de marquage routier,
- la fenêtre de recherche comprenant une troisième zone (43a, 43b) définie de sorte à assurer une continuité entre les première (41a, 41 b) et deuxième (42a, 42b) zones.

2. Procédé selon la revendication précédente dans lequel le niveau de luminance NVG(Sⱼ) est un niveau moyen de luminance NVGmoyen(Sⱼ) correspondant à la moyenne des luminances de chacun des pixels de ce segment Sⱼ.

3. Procédé selon l'une quelconque des revendications précédentes dans lequel on effectue les étapes suivantes pour déterminer si on sélectionne ou non le segment Sⱼ:
- on détermine si le niveau de luminance NVG(Sⱼ) de ce segment est compris dans l'intervalle [NVGmoyen(Lᵢ₋₁) - S ; NVGmoyen(Lᵢ₋₁) + S'] avec S et S' étant des seuils prédéfinis et NVGmoyen(Lᵢ₋₁) étant le niveau de luminance de une ou plusieurs autres lignes adjacentes,
- si NVG(Sⱼ) est compris dans cet intervalle alors on sélectionne le segment Sⱼ,
- si NVG(Sⱼ) n'est pas compris dans cet intervalle alors on exclut ce segment Sⱼ de la région d'intérêt.

4. Procédé selon l'une quelconque des revendications précédentes dans lequel la définition d'au moins un segment Sⱼ d'une ligne Lᵢ comprend les étapes suivantes : on considère un pixel de la ligne Lᵢ, on constitue le segment Sⱼ en incrémentant ce pixel des pixels consécutifs (503) et appartenant à cette même ligne Lᵢ jusqu'à atteindre un nombre maximal de pixels prédéterminé (505).

5. Procédé selon la revendication précédente dans lequel, préalablement à la définition du segment Sⱼ, on recherche des contours par une méthode de détection de contours et dans lequel on stoppe l'incrémentation du segment Sⱼ et on ferme ce segment Sⱼ lorsque le pixel incrémenté forme un contour (504).

6. Procédé selon l'une quelconque des revendications précédentes dans lequel on exclut le segment Sⱼ de la région d'intérêt si la longueur de ce segment Sⱼ est inférieure à une longueur minimale prédéterminée (507, 508).

7. Procédé selon la revendication 1 dans lequel on stoppe l'incrémentation du segment Sⱼ et on ferme ce segment Sⱼ lorsque le pixel incrémenté correspond à une bordure de la fenêtre de recherche (506).

8. Procédé selon la revendication 1 dans lequel on découpe la fenêtre de recherche de sorte que la troisième zone (43a, 43b) corresponde dans l'image à une transition entre la route et le ciel.

9. Procédé selon la revendication 1 dans lequel on positionne verticalement les limites entre les zones (41 a, 41 b, 42a, 42b, 43a, 43b) de la fenêtre de recherche en fonction d'informations relatives au tangage du véhicule ou de sorte que la troisième zone soit verticalement centrée autour d'un point de fuite de l'image (44b).

10. Système pour déterminer une région d'intérêt dans une image **caractérisé en ce qu'**il comprend un dispositif d'acquisition d'une image et des moyens de traitement agencés pour mettre en oeuvre le procédé selon l'une quelconque des revendications précédentes.

## Patentansprüche

1. Verfahren zum Festlegen eines Prüffensters in einem Bild, das die folgenden Schritte umfasst:
- Bestimmen einer Vielzahl von aus Pixeln gebildeten Zeilen L_{i j=1,...,n} in dem Bild,
- Bestimmen einer Vielzahl von aus Pixeln (312, 313, 314) gebildeten Segmenten S_{j j=1,...,m} in jeder Zeile Lᵢ,
- Berechnen eines Leuchtdichtewertes NVG(Sⱼ) für jedes Segment Sⱼ anhand der Leuchtdichte der dieses Segment Sⱼ bildenden Pixel,
- abhängig von diesem Leuchtdichtewert NVG(Sⱼ) Auswählen des Segments Sⱼ oder Ausschließen dieses Segments Sⱼ aus dem Prüffenster (315, 316, 317),
- Erhalten des Prüffensters durch Zusammenfügen aller Segmente, die für jede der Zeilen (318) ausgewählt sind,
**dadurch gekennzeichnet, dass** das Verfahren in einem Straßenfahrzeug eingesetzt wird und dass
- in dem Bild ein Suchfenster isoliert wird, in dem die Vielzahl von Zeilen Lᵢ (600, 650) bestimmt wird,
- das Suchfenster vertikal in mehrere Bereiche aufgeteilt wird und jedem Bereich spezifische Regeln hinsichtlich der Bestimmung der Segmente Sⱼ und/oder der Zeilen Lᵢ zugewiesen werden,
- wobei das Suchfenster wenigstens einen ersten Bereich (41a, 41b) und einen zweiten Bereich (42a, 42b) umfasst, die jeweils horizontal um einen ersten und einen zweiten Prüfpunkt des Bildes herum angeordnet sind,
- anhand eines auf einem Lenkradwinkel des Fahrzeugs basierenden Systems zur Fluchtpunkterkennung und/oder anhand von Daten aus einem Navigationssystem und/oder anhand eines Systems zur Erkennung von Fahrbahnmarkierungen wenigstens einer der beiden Prüfpunkte als ein Fluchtpunkt (44b) festgelegt wird,
- wobei das Suchfenster einen dritten Bereich (43a, 43b) umfasst, der solchermaßen bestimmt ist, dass zwischen dem ersten (41a, 41b) und dem zweiten (42a, 42b) Bereich ein kontinuierlicher Verlauf gewährleistet ist.

2. Verfahren nach dem vorhergehenden Anspruch,
bei dem der Leuchtdichtewert NVG(Sⱼ) ein mittlerer Leuchtdichtewert NVGmoyen(Sⱼ) ist, der dem Mittelwert der Leuchtdichte eines jeden Pixels dieses Segments Sⱼ entspricht.

3. Verfahren nach einem der vorhergehenden Ansprüche,
bei dem die folgenden Schritte ausgeführt werden, um festzulegen, ob das Segment Sⱼ ausgewählt wird oder nicht:
- Festlegen, ob der Leuchtdichtewert NVG(Sⱼ) dieses Segments in dem Intervall [NVGmoyen(Lᵢ₋₁) - S; NVGmoyen (Lᵢ₋₁) + S'] enthalten ist, wobei S und S' vorbestimmte Schwellenwerte sind und NVGmoyen(Lᵢ₊₁) der Leuchtdichtewert einer oder mehrerer anderer benachbarter Zeilen ist,
- liegt NVG(Sⱼ) in diesem Intervall, dann Auswählen des Segments Sⱼ,
- liegt NVG(Sⱼ) nicht in diesem Intervall, dann Ausschließen des Segments Sⱼ aus dem Prüffenster.

4. Verfahren nach einem der vorhergehenden Ansprüche,
bei dem das Bestimmen wenigstens eines Segments Sⱼ einer Zeile Lᵢ die folgenden Schritte umfasst: Berücksichtigen eines Pixels der Zeile Lᵢ, Bilden des Segments Sⱼ durch Inkrementieren dieses Pixels um die nachfolgenden und zu derselben Zeile Lᵢ gehörenden Pixel (503), bis eine Maximalzahl vorbestimmter Pixel (505) erreicht ist.

5. Verfahren nach dem vorhergehenden Anspruch,
bei dem vor dem Bestimmen des Segments Sⱼ Konturen durch ein Verfahren zur Konturerkennung gesucht werden und bei dem das Inkrementieren des Segments Sⱼ gestoppt und dieses Segment Sⱼ geschlossen wird, wenn das inkrementierte Pixel eine Kontur (504) bildet.

6. Verfahren nach einem der vorhergehenden Ansprüche,
bei dem das Segment Sⱼ aus dem Prüffenster ausgeschlossen wird, wenn die Länge dieses Segments Sⱼ geringer ist als eine vorbestimmte Mindestlänge (507, 508).

7. Verfahren nach Anspruch 1,
bei dem das Inkrementieren des Segments Sⱼ gestoppt und dieses Segment Sⱼ geschlossen wird, wenn das inkrementierte Pixel einem Rand des Suchfensters (506) entspricht.

8. Verfahren nach Anspruch 1,
bei dem das Suchfenster solchermaßen aufgeteilt wird, dass der dritte Bereich (43a, 43b) in dem Bild einem Übergang zwischen Straße und Himmel entspricht.

9. Verfahren nach Anspruch 1,
bei dem die Grenzen zwischen den Bereichen (41a, 41b, 42a, 42b, 43a, 43b) des Suchfensters abhängig von Daten zur Nickbewegung des Fahrzeugs vertikal oder derart angeordnet werden, dass der dritte Bereich um einen Fluchtpunkt des Bildes (44b) herum vertikal ausgerichtet ist.

10. System zum Bestimmen eines Prüffensters in einem Bild,
**dadurch gekennzeichnet, dass** es eine Vorrichtung zum Erfassen eines Bildes und Bildverarbeitungsmittel umfasst, die zum Durchführen des Verfahrens nach einem der vorhergehenden Ansprüche ausgebildet sind.

## Claims

1. Method for determination of a region of interest in an image comprising the following steps:
- a plurality of lines L_{i i=1, .., n} formed by pixels is defined in the image;
- in each line Lᵢ a plurality of segments S_{j j=1, .., m} constituted by pixels (312, 313, 314) is defined;
- a level of luminance NVG(Sⱼ) of each segment Sⱼ is calculated from the luminance of the pixels which constitute this segment Sⱼ:
- according to this level of luminance NVG(Sⱼ) the segment Sⱼ is selected, or this segment Sⱼ is excluded from the region of interest (315, 316, 317);
- the region of interest is obtained by merging all of the segments selected for each of the lines (318),
**characterised in that** the method is implemented in a road vehicle, and **in that**:
- there is isolation in the image of a search window inside which the plurality of lines Lᵢ (600, 650) is defined;
- the search window is cut vertically into a plurality of zones, and each zone is allocated specific rules concerning the definition of the segments Sⱼ and/or of the lines Lᵢ:
- the search window comprises at least a first zone (41a, 41b) and a second zone (42a, 42b) which are positioned respectively horizontally around a first and a second point of interest of the image;
- there is determination of at least one out of the two points of interest as being an escape point (44b) on the basis of an escape point detection system based on an angle at the steering wheel of the vehicle and/or on the basis of information obtained from a navigation system and/or on the basis of a system for detection of road marking lines;
- the search window comprising a third zone (43a, 43b) defined such as to ensure continuity between the first (41a, 41b) and second (42a, 42b) zones.

2. Method according to the preceding claim, wherein the level of luminance NVG(Sⱼ) is a mean level of luminance NVGmoyen(Sⱼ) corresponding to the mean of the luminances of each of the pixels of this segment Sⱼ.

3. Method according to either of the preceding claims, wherein the following steps are carried out in order to determine whether the segment Sⱼ is selected or not:
- it is determined whether the level of luminance NVG(Sⱼ) of this segment is contained in the interval [NVGmoyen(Lᵢ₋₁) - S; NVGmoyen(Lᵢ₋₁) + S'], with S and S' being predefined thresholds, and NVGmoyen(Lᵢ₋₁) being the level of luminance of one or more other adjacent lines;
- if NVG(Sⱼ) is contained in this interval, then the segment Sⱼ is selected;
- if NVG(Sⱼ) is not contained in this interval, then this segment Sⱼ is excluded from the region of interest.

4. Method according to any one of the preceding claims, wherein the definition of at least one segment Sⱼ of a line Lᵢ comprises the following steps: a pixel of the line Lᵢ is taken into consideration, the segment Sⱼ is constituted by incrementing this pixel by the consecutive pixels (503) belonging to the same line Lᵢ, until a maximum predetermined number of pixels has been reached (505).

5. Method according to the preceding claim, wherein, prior to the definition of the segment Sⱼ, contours are searched for by means of a contour detection method, and wherein the incrementation of the segment Sⱼ is stopped, and this segment Sⱼ is closed when the incremented pixel forms a contour (504).

6. Method according to any one of the preceding claims, wherein the segment Sⱼ is excluded from the region of interest if the length of this segment Sⱼ is shorter than a minimum predetermined length (507, 508).

7. Method according to claim 1, wherein the incrementation of the segment Sⱼ is stopped, and this segment Sⱼ is closed, when the incremented pixel corresponds to an edge of the search window (506).

8. Method according to claim 1, wherein the search window is cut, such that the third zone (43a, 43b) corresponds in the image to a transition between the road and the sky.

9. Method according to claim 1, wherein the limits between the zones (41a, 41b, 42a, 42b, 43a, 43b) of the search window are positioned vertically according to information relating to the pitching of the vehicle, or such that the third zone is centred vertically around an escape point of the image (44b).

10. System for determination of a region of interest in an image, **characterised in that** it comprises a device for acquisition of an image, and processing means which are designed to implement the method according to any one of the preceding claims.
